Europäisches Patentamt

European Patent Office

Office européen des brevets

(19)

(11) Veröffentlichungsnummer: **0 259 801**
**B1**

(12) **EUROPÄISCHE PATENTSCHRIFT**

(45) Veröffentlichungstag der Patentschrift: **30.01.91**

(51) Int. Cl.⁵: **A 01 B 59/042**

(21) Anmeldenummer: **87112979.7**

(22) Anmeldetag: **04.09.87**

(54) Geräteanbauvorrichtung für landwirtschaftlich nutzbare Zugfahrzeuge.

(30) Priorität: **11.09.86 DE 3630873**

(43) Veröffentlichungstag der Anmeldung:
**16.03.88 Patentblatt 88/11**

(45) Bekanntmachung des Hinweises auf die
Patenterteilung:
**30.01.91 Patentblatt 91/05**

(84) Benannte Vertragsstaaten:
**AT DE FR IT**

(56) Entgegenhaltungen:
**EP-A-0 159 948**
**DE-A-2 506 745**
**DE-B-1 104 243**
**DE-B-1 122 313**
**FR-A-2 308 538**
**FR-A-2 454 255**
**US-A-2 697 973**
**US-A-2 888 997**
**US-A-3 432 184**

(73) Patentinhaber: **Xaver Fendt & Co.**
**Johann-Georg-Fendt-Strasse 4**
**D-8952 Marktoberdorf (DE)**

(72) Erfinder: **Gaal, Sandor**
**Reichshofstrasse 27**
**D-8952 Marktoberdorf (DE)**
Erfinder: **Müller, Hubert**
**Reichshofstrasse 29**
**D-8952 Marktoberdorf (DE)**

Courier Press, Leamington Spa, England.

**Beschreibung**

Die Erfindung betrifft eine Geräteanbauvorrichtung für landwirtschaftlich nutzbare Zugfahrzeuge, die zwei Unterlenker aufweist, welche als in sich starre Einheit mittels je eines Hubzylinders un eine Querachse im Sinne eines Hebens und Senkens des Arbeitsgerätes verschwenkbar sind, ein Pendeln des Arbeitsgerätes um eine mittig in Fahrzeuglängsrichtung verlaufende Achse erlauben und bezüglich ihren endseitigen Anschlußstellen für das Arbeitsgerät relativ zueinander höhenmäßig versetzbar sind.

Eine Geräteanbauvorrichtung der beschriebenen Gattung ist in der DE—PS 25 06 745 beschrieben. Dort bestehen die Unterlenker aus einem fahrzeugseitigen Lenkerteil und einem geräteseitigen Lenkerteil. Die fahrzeugseitigen Lenkerteile sind mit Hilfe eines Rohres starr miteinander verbunden und um eine fahrzeugfeste, horizontale Querachse verschenwenkbar. In den freien Endbereichen sind die fahrzeugseitigen Lenkerteile gelenkig mit den geräteseitigen Lenkerteilen verbunden, wobei diese Gelenkverbindungen wahlweise innerhalb vorgegebener Grenzen frei beweglich oder in einer bestimmten Relativstellung der beiden Lenkerteile feststellbar sind. Durch Auswechseln bestimmter Teile der Anbauvorrichtung ist die Relativstellung zwar veränderbar, jedoch ist dies nur außerhalb eines Arbeitseinsatzes bei entlasteten Unterlenkern möglich. Damit ist die bekannte Geräteanbauvorrichtung für viele Zwecke nur beschränkt verwendbar. So wird bei der Pflege und Ernte von Hopfen als Arbeitsgerät von den Unterlenkern ein hohenverstellbarer Aufbau getragen, der es einer darauf befindlichen Person ermöglicht, alle anfallenden Arbeiten an den Pflanzen auszuführen. Da das Gelände in solchen Pflanzungen nicht vollkommen eben ist, andererseits aber der Aufbau zur Verbesserung der Arbeitsbedingungen und Vermeidung von Unfallgefahren durch Überschlagen des Fahrzeuges möglichst senkrecht stehen sollte, muß die Geräteanbauvorrichtung zu jeder Zeit die Möglichkeit bieten, das von ihr getragene Arbeitsgerät in einer quer zum Fahrzeug verlaufenden vertikalen Ebene stufenlos zu verschwenken. Dies ist mit der bekannten Geräteanbauvorrichtung jedoch nicht durchführbar.

Bei beweglichem Gelenk zwischen den beiden Lenkerteilen kann zwar das Arbeitsgerät ferner zur Anpassung an die vorhandene Bodenkontur um eine mittig in Fahrzeuglängsrichtung verlaufende Achse verschwenken. Das Ausmaß der Verschwenkbarkeit ist jedoch durch dabei auftretende Verspannungen relativ begrenzt. Die Verspannungen resultieren daraus, daß die geräteseitigen Kupplungsstellen einen Kreisbogen um die mittig in Fahrzeuglängsrichtung verlaufende Achse ausführen, während die lenkerseitigen Kupplungsstellen einen Kreisbogen um die quer zur Fahrzeuglängsrichtung verlaufende Achse ihrer Gelenke ausführen.

Durch die starre Verbindung der fahrzeugseitigen Lenkerteile bietet die bekannte Geräteanbauvorrichtung zwar die Gelegenheit, bestimmte seitlich zu führende Arbeitsgeräte, wie z.B. Gerader, Schneepflüge etc., wirkungsvoller einzusetzen, als dies bei Geräteanbauvorrichtungen der Fall ist, bei denen die Unterlenker voneinander unabhangig gelenkig am Fahrzeug gelagert sind und wahlweise ein seitliches Pendeln des angebauten Arbeitsgerätes erlauben oder feststellbar sind. Auf der anderen Seite wäre es jedoch wünschenswert, wenn auch die bekannte Geräteanbauvorrichtung die Möglichkeit bieten würde, das Arbeitsgerät in bestimmten Einsatzfällen seitlich pendeln zu lassen und die Anbauvorrichtung erst bei angehobenem Arbeitsgerät gegen seitliches Verschwenken der Unterlenker zu sichern.

Ausgehend von dem aufgezeigten Stand der Technik liegt der Erfindung die Aufgabe zugrunde, die Einsatzmöglichkeiten einer Geräteanbauvorrichtung der eingangs beschriebenen Gattung bei einfachem Aufbau zu verbessern.

Zur Lösung dieser Aufgabe wird vorgeschlagen, daß die Unterlenker einstückig ausgebildet sind und auf einer seitlich verschiebbaren sowie in einer vertikalen Querebene verschenwenkbaren Querachse gelagert sind.

Dadurch, daß nach der Erfindung die Querachse nicht ortsfest am Fahrzeugrahmen gelagert ist, können die Unterlenker aktiv durch entsprechende Steuerung der Lage der Querachse oder passiv über das Arbeitsgerät jede erforderliche Stellung einnehmen. Infolge dieser Abhängigkeit können jegliche Umbauten an den Unterlenkern entfallen und es besteht die Möglichkeit, die Einstellung der erforderlichen Freiheitsgrade des Arbeitsgerätes in einfachster Weise vom Fahrersitz aus durchzuführen.

Weitere vorteilhafte Weiterbildungen der Erfindung sind in den Unteransprüchen beschrieben.

Die Erfindung wird im folgenden anhand einer Zeichnung näher erläutert. Es zeigt:

Fig. 1 Eine Perspektivansicht eines ersten Ausführungsbeispieles einer für den Anbau am Heck eines Zugfahrzeuges bestimmeten Geräteanbauvorrichtung und

Fig. 2 eine Perspektivansicht eines zweiten Ausführungsbeispieles einer für den Anbau am Heck eines Zugfahrzeuges bestimmeten Geräteanbauvorrichtung.

Die erfindungsgemäße Geräteanbauvorrichtung ist am Heck eines in den Figuren der besseren Übersicht wegen nicht gezeigten Zugfahrzeuges befestigt und weist einen im wesentlichen dreieckförmigen Rahmen 1 auf, der mit seiner nach vorn weisenden Spitze in einem an der Unterseite des Fahrzeuges abgestützten Kugelgelenk 2 allseitig drehbar ist. Angeordnet ist das Kugelgelenk 2 mittig zum Fahrzeug etwa im Bereich dessen Hochachse, wobei seine fahrzeugseitige Abstützung über einen einzigen ansich bekannten, nicht gezeigten Sensor für die vom Arbeitsgerät 3 auf die Geräteanbauvorrichtung ausgeübte Zugkraft erfolgt. Der Sensor ist als Kraftmeßbolzen ausgebildet und stellt eine zentrale Meßstelle für die Zugkraft dar. Im mittleren Bereich, oberhalb seiner Ebene ist am Rahmen 1 drehfest und unverscheibbar in zwei Klötzen 4 eine Querachse 5 gelagert, die mit zwei Verlängerunsstücken 5a auf beiden Seiten über die Klötze 4 hinausragt. Im Bereich zwischen den beiden Klötzen 4 sind auf der Querachse 5 zwei über ein Rohr 6 zu einer insich starren Einheit verbunene Unterlenker 7 verschwenkbar gelagert, die in ihren Endbereichen annähernd rechtwinklig abgebogen sind und Annschlußstellen 8 für das aufzunehmende Arbeitsgerät 3 aufweisen.

Im Bereich der Verlängerungsstücke 5a ist die Querachse 5 über ein Kugelgelenk 9 und eine Schaukelstrebe 10 mit Hilfe eines weiteren Kugelgelenkes 11 an einem zweiarmigen Hebel 12 aufgehängt. Gemeinsam bilden der zweiarmige Hebel 12, die Schaukelstreben 10 und die Querachse 5 annähernd ein in einer vertikalen, quer zur Fahrzeuglängsrichtung verlaufenden Ebene liegendes Rechteck. In Farhzeugmitte ist der Hebel 12 um eine in Fahrzeuglängsrichtung verlaufende Achse 12a schwenkbar am Fahrzeug gelagert. Mit Hilfe einer unten beschriebenen Einrichtung kann der Hebel 12 in der gezeigten Normalstellung festgestellt werden. Das Verschwenken der Unterlenker 7 um die Querachse 5 erfolgt mit Hilfe zweier mit ihren Kolbenstangen 13a an den Unterlenkern 7 angreifender Hubzylinder 13, die sich anderenends in möglichst unmittelbarer Nähe der Anslenkestellen der Schaukelstreben 10 derart am Hebel 12 abstützen, daß sie zumindest annähernd parallel zueinander verlaufen.

In dem beschreibenen Aufbaustadium ist die Geräteanbauvorrichtung in der Lage, durch Ein- und Ausfahren der Hubzylinder 13 die Unterlenker 7 als Ganzes zu verschwenken und so das daran befestigts Arbeitsgerät 3 auf- oder abzubewegen. Seitliche Bewegungen des Arbeitsgerätes 3 führen zu einem gemeinsamen Verschwenken sowohl der Unterlenker 7, der Querachse 5 sowie des Rahmens 1 um das Kugelgelenk 2.

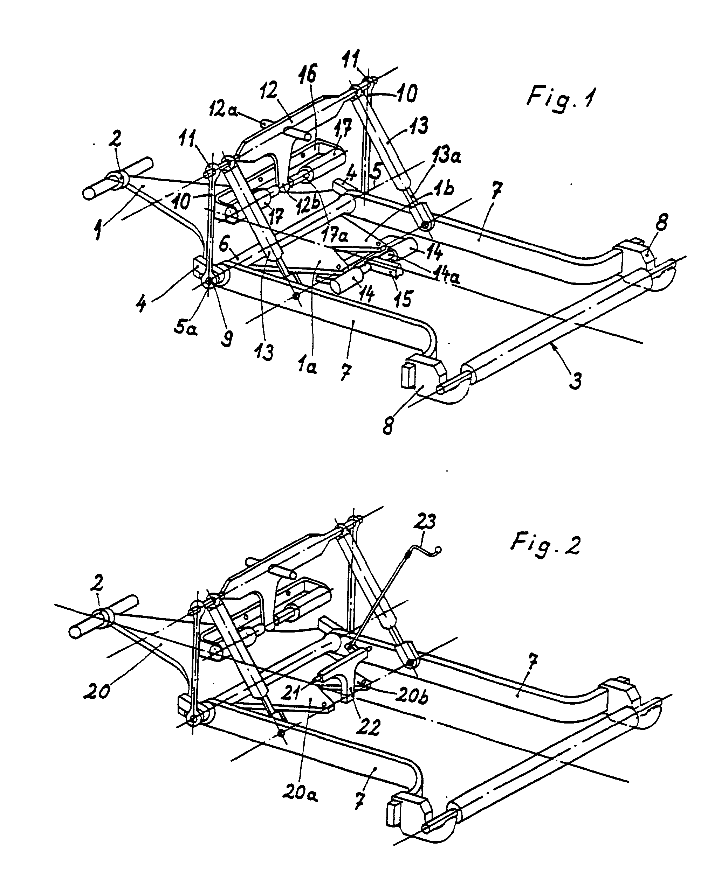

Zum Unterdrücken seitlicher Schwenkbewegungen der Unterlenker 7 ist bei dem Ausführungsbeispiel gemäß Fig. 1 der hintere, zwischen den Unterlenkern 7 befindliche Bereich des Rahmens 1 als gabelförmiges Arretierteil ausgebildet. Dessen die Gabel bildende Seitenteile 1a, 1b umgreifen mit je einem einfach wirkenden Druckmittelzylinder 14 einen mittig zum Fahrzeug angenordneten fahrzeugfesten Anschlag 15 derart, daß die Kolbenstangen 14a von entgegengesetzten Seiten gegen den Anschlag 14 geschoben werden können und dabei den Rahmen 1 mitsamt den Unterlenkern 7 in einer erwünschten Stellung seitlich fixieren. Bei zurückgezogenen Kolbenstangen 14a steht den Unterlenkern 7 die maximale Bewegungsfreiheit in seitlicher Richtung zur Verfügung. Die Druckmittelzylinder 14 sind unabhängig voneinander betätigbar und weisen einen Kolbenstangenhub auf, der es gestattet, die Unterlenker 7 auch in einer relativ zum Fahrzeug außermittigen Stellung au arretieren.

Um ein von den Unterlenkern 7 getragenes Arbeitsgerät 3 auch innerhalb einer vertikalen Querebene zu verschwenken, ist die Schwenkbewegung des doppelarmigen Hebels 12 ebenfalls steuerbar. Dieser weist hierzu einen mittig leigenden Arm 12b auf, der mit zwei sich an einem fahrzeugfestern Rahmen 16 abstützenden einfachwirkenden Druckmittelzylindern 17 zusammenarbeitet. Die Druckmittelzylinder 17 befinden sich auf entgegengesetzten Seiten des Armes 12b, so daß es je nach Stellung der Kolbenstangen 17a wahlweise möglich ist, den Hebel 12 in eine bestimmte gewünschte Stellung zu verschwenken und dort zu arretieren, oder dem Hebel 12 eine vorgebbar begrenzte Pendelfähigkeit zu verleihen. Anstelle zweier gegeneinander angestellter einfachwirkender Druckmittelzylinder 17 kann auch mit einem einzigen doppeltwirkenden Druckmittelzylinder augekommen werden, wenn auf die Pendelfahigkeit des Hebels 12 verzichtet wird.

Bei dem in Fig. 2 gezeigten zweiten Ausführungsbeispiel einer Geräteanbauvorrichtung ist der Rahmen 20 zum Unterdrücken der seitlichen Schwenkbewegungen der Unterlenker 7 in dem zwischen den Unterlenkern 7 befindlichen Bereich ebenfalls gabelförmig ausgestaltet. Die die Gabel bildenden Steitenteile 20a, 20b umgreifen einen mittig zum Fahrzeug angeordneten, in Fahrzeugglängsrichtung verstellbaren, dagegen quer dazu fixierten Anschlag. Der Bereich zwischen den Seitenteilen 20a, 20b ist dreieckformig gestaltet und weist mit seiner Spitze in Fahrtrichtung. Oberhalb dieses Bereiches ist am Fahrzeug um eine quer verlaufende Achse 21 eine den Anschlag verkörpernde Klappe 22 gelagert, die mittels einer handbetätigbaren Kurbel 23 zwischen zwei Schwenkendstellungen verschwenkbar ist. In der gezeigten Schwenkendstellung ist eine maximale seitliche Bewegungsmöglichkeit des Rahmens 20 gegenüber der Klappe 22 gegeben. In der anderen Schwenkendstellung dagegen liegt die Klappe 22 vorn im Bereich an den Seitenteilen 20a, 20b an, so daß der Rahmen 20 gegen seitliches Verschwenken blockiert ist.

## Patentansprüche

1. Geräteanbauvorrichtung für landwirtschaftlich nutzbare Zugfahrzeuge, die zwei Unterlenker (7) aufweist, welche als in sich starre Einheit mittels je eines Hubzylinders (13) um eine Querachse (5) im Sinne eines Hebens und Senkens des Arbeitsgerätes (3) verschwenkbar sind, ein Pendeln des Arbeitsgerätes um eine mittig in Fahrzeuglangsrichtung verlaufende Achse (12a) erlauben und bezüglich ihren endseitigen Anschlußstellen (8) für das Arbeitsgerät relativ zueinander höhenmäßig versetzbar sind, dadurch gekennzeichnet, daß die Unterlenker (7) einstückig ausgebildet sind und auf einer seitlich verschiebbaren sowie in einer vertikalen Querebene verschwenkbaren Querachse (5) gelagert sind.

2. Geräteanbauvorrichtung nach Anspruch 1, dadurch gekennzeichnet, daß die Querachse (5) in jeder eingestellten Lage feststellbar ist.

3. Geräteanbauvorrichtung nach den Ansprüchen 1 und 2, dadurch gekennzeichnet, daß die Querachse (5)

a) einem Rahmen (1,20) zugeordnet ist, der sich an einem an der Unterseite des Fahrzeuges angeordneten Kugelgelenk (2) abstützt,

b) gelenkig an einem zweiarmigen Hebel (12) aufgehängt ist, der um eine mittig in Fahrzeuglangsrichtung verlaufende Achse (12a) pendelbar gelagert ist und

daß die Hubzylinder (13) am Hebel (12) angelenkt sind.

4. Geräteanbauvorrichtung nach den Ansprüchen 1 bis 3, dadurch gekennzeichnet, daß das Kugelgelenk (2) zumindest annähernd im Bereich der Hochachse des Fahrzeuges liegt.

5. Geräteanbauvorrichtung nach den Ansprüchen 1 bis 4, dadurch gekennzeichnet, daß die Querachse (5) über Schaukelstreben (10) mit dem zweiarmigen Hebel (12) verbunden ist, wobei die Schaukelstreben (10) zumindest annähernd vertikal verlaufen.

6. Geräteanbauvorrichtung nach den Ansprüchen 1 bis 5, dadurch gekennzeichnet, daß in Fahrzeuglängsrichtung gesehen die Schaukelstreben (10) und die Hubzylinder (13) zumindest annähernd parallel zueinander verlaufen.

7. Geräteanbauvorrichtung nach den Ansprüchen 1 bis 6, dadurch gekennzeichnet, daß der Rahmen (1,20) zur Begrenzbarkeit der seitlichen Bewegung der Unterlenker (7) einen gabelförmigen Arretierteil aufweist, deren Seitenteile (1a, 1b; 20a, 20b) einen fahrzeugseitigen Anschlag mit Abstand umgreifen.

8. Geräteanbauvorrichtung nach Anspruch 7, dadurch gekennzeichnet, daß der wirksame Abstand der Seitenteile (1a, 1b; 20a, 20b) zum Anschlag veränderbar ist.

9. Geräteanbauvorrichtung nach den Ansprüchen 7 und 8, dadurch gekennzeichnet, daß fahrzeugseitig ein quer zur Fahrzeughglängsrichtung festgelegter und in Fahrzeuglängsrichtung beweglicher Anschlag gelagert ist, der mit dem Arretierteil derart zusammenwirkt, daß in einer Normalstellung des Anschlages ein für eine erwünschte Seitenverschwenkbarkeit der Unterlenker (7) ausreichendes Spiel zwischen dem Arretierteil und dem Anschlag gegeben ist, dagegen in der Betätigungsstellung des Anschlages dieser fest an dem Arretierteil anliegt.

10. Geräteanbauvorrichtung nach den Ansprüchen 7 bis 9, dadurch gekennzeichnet, daß die Seitenteile (20a, 20b) des Arretierteils in einem die Seitenverschwenkbarkeit der Unterlenker (7) vorgebenden Abstand voneinander gangeordnet sind.

11. Geräteanbauvorrichtung nach den Ansprüchen 7 bis 10, dadurch gekennzeichnet, daß der Anschlag in beliebigen Zwischenstellungen feststellbar ist.

12. Geräteanbauvorrichtung nach den Ansprüchen 7 bis 11, dadurch gekennzeichnet, daß als Anschlag eine um eine Querachse (5) verschwenkbare Klappe (22) dient.

13. Geräteanbauvorrichtung nach den Ansprüchen 7 bis 12, dadurch gekennzeichnet, daß die Betätigungseinrichtung zum Verschwenken der Klappe (22) so mit den Unterlenkern (7) zusammenwirkt, daß durch die hochschwenkenden Unterlenker (7) die Klappe (22) in ihre Betätigungsstellung geschwenkt wird und daß zusätlich eine von den Unterlenkern (7) unabhängige Betätigungseinrichtung (Kurbel (23)) vorhanden ist.

14. Geräteanbauvorrichtung nach den Ansprüchen 7 und 8, dadurch gekennzeichnet, daß der Anschlag (15) fahrzeugfest angeordnet ist und zur Veränderung des wirksamen Abstandes der Seitenteile (1a, 1b) zum Anschlag (15) zwei einfachwirkende hydraulisch betätigbare Stellmotoren (Druckmittelzylinder (14)) dienen.

15. Geräteanbauvorrichtung nach den Ansprüchen 7, 8 und 14, dadurch gekennzeichnet, daß die Druckmittelzylinder (14) von den Seitenteilen (1a, 1b) getragen sind.

16. Geräteanbauvorrichtung nach den Ansprüchen 1 bis 15, dadurch gekennzeichnet, daß der zweiarmige Hebel (12) zumindest in seinen Schwenkendstellungen feststellbar ist.

17. Geräteanbauvorrichtung nach Anspruch 16, dadurch gekennzeichnet, daß der Hebel (12) in stufenlos veränderbaren Schwenkstellungen feststellbar ist.

18. Geräteanbauvorrichtung nach den Ansprüchen 16 und 17, dadurch gekennzeichnet, daß der Hebel (12) mittels eines doppeltwirkenden Stellmotors oder zweiter gegeneinander arbeitender einfachwirkender Stellmotoren (Druckmittelzylinder (17)) oder einer Handkurbel verstellbar ist.

**Revendications**

1. Dispositif d'attelage d'outil pour un tracteur à usage agricole, comportant deux bras inférieurs (7) qui peuvent être basculés sous la forme d'un ensemble rigide sur un axe transversal (5) dans le sens du soulèvement et de l'abaissement d'outil (3) par l'intermédiaire de chaque fois un vérin (13), permettant un mouvement pendulaire de l'outil sur un axe (12a) passant par le milieu dans la direction longitudinale du tracteur et pouvant être décalés en hauteur de manière relative pour leur organe de raccordement (8), d'extrémité, pour l'outil, dispositif caractérisé en ce que les bras inférieurs (7) sont en une seule pièce et sont montés sur un axe transversale (7) coulissant latéralement et susceptible de basculer dans un plan vertical transversal.

2. Dispositif d'attelage selon la revendication 1, caractérisé en ce que l'axe transversal (5) peut être bloqué dans n'importe quelle position réglée.

3. Dispositif d'attelage selon les revendications 1 et 2, caractérisé en ce que l'axe transversal (5)

a) est associé à un châssis (1, 20) qui s'appuie contre une articulation à rotule (2) prévue sur le côté inférieur de tracteur,

b) est suspendu de manière articulée sur un levier (12) à deux bras qui est monté avec mouvement pendulaire sur un axe (12a) passant au milieu de la direction longitudinale du tracteur, et les vérins (13) sont articulés sur le levier (12).

4. Dispositif d'attelage selon les revendications 1 à 3, caractérisé en ce que l'articulation à rotule (2) se situe au moins approximativement au niveau de l'axe vertical du véhicule.

5. Dispositif d'attelage selon les revendications 1 à 4, caractérisé en ce que l'axe transversal (5) est relié au levier à deux bras (12) par l'intermédiaire d'entretoises de basculement (10), ces entretoises (10) étant au moins sensiblement verticales.

6. Dispositif d'attelage selon les revendications 1 à 5, caractérisé en ce que les entretoises de basculement (10) et les vérins (13) sont au moins approximativement parallèles lorsqu'on regarde dans la direction longitudinale du véhicule.

7. Dispositif d'attelage selon les revendications 1 à 6, caractérisé en ce que le châssis (1, 20) comporte une pièce de blocage en forme de fourche pour limiter le mouvement latéral des bras inférieurs (7), pièce dont les parties latérales (1a, 1b; 20a, 20b) entourent, avec un certain jeu, une butée prévue sur le tracteur.

8. Dispositif d'attelage selon la revendication 7, caractérisé en ce que le jeu entre les parties latérales (1a, 1b; 20a, 20b) et la butée est réglable.

9. Dispositif d'attelage selon les revendications 7 et 8, caractérisé par une butée du tracteur, qui peut être bloquée transversalement à la direction longitudinale du tracteur et être mobile par rapport à cette direction, butée qui coopère avec la pièce de blocage de manière qu'en position normale de la butée il subsiste un jeu suffisant pour un mouvement de basculement latéral souhaité des bras inférieurs (7) entre la pièce de blocage et la butée alors que la butée s'applique solidairement contre la pièce de blocage en position d'actionnement de la butée.

10. Dispositif d'attelage selon les revendications 7 à 9, caractérisé en ce que les parties latérales (20a, 20b) de la pièce de blocage sont prévues à une distance réciproque prédéterminant le mouvement de basculement latéral des bras inférieurs (7).

11. Dispositif d'attelage selon les revendications 7 à 10, caractérisé en ce que la butée peut se bloquer dans n'importe quelle position intermédiaire.

12. Dispositif d'attelage selon les revendications 7 à 11, caractérisé en ce que la butée est constituée par un volet (22) basculant sur un axe transversale (5).

13. Dispositif d'attelage selon les revendications 7 à 12, caractérisé en ce que le dispositif d'actionnement pour basculer le volet (22) coopère avec les bras inférieurs (7) pour que les bras inférieurs (7), susceptibles de se relever, basculent le volet (22) autour de sa position de manoeuvre et en ce qu'il est prévu en outre un dispositif de manoeuvre (manivelle 23) indépendant des bras inférieurs (7).

14. Dispositif d'attelage selon les revendications 7 et 8, caractérisé en ce que la butée (15) est prévue sur le tracteur et que pour modifier la distance active des parties latérales (1a, 1b) par rapport à la butée (15) on a deux moteurs de réglage (vérin 14) à simple effet à commande hydraulique.

15. Dispositif d'attelage selon les revendications 7, 8, 14, caractérisé en ce que les vérins (14) sont portés par les parties latérales (1a, 1b).

16. Dispositif d'attelage selon les revendications 1 à 15, caractérisé en ce que le levier à deux bras (12) se bloque au moins dans ses positions de fin de course de basculement.

17. Dispositif d'attelage selon la revendication 16, caractérisé en ce que le levier (12) peut être bloqué dans des positions de basculement variables en continu.

18. Dispositif d'attelage selon les revendications 16 et 17, caractérisé en ce que le levier (12) peut être réglé à l'aide d'un moteur de réglage à double effect ou de deux moteurs de réglage à simple effect agissant de manière antagoniste (vérins 17) ou à l'aide d'une manivelle.

**Claims**

1. Hitching device for an agricultural tractor, comprising two lower control arms (7) which form a rigid unit, displaceable around a transverse axis (5) in the sense of lifting and lowering the appliance (3) by means of respective lifting cylinders (13), which allow the appliance to swing around an axis (12a) which is centrally located in the vehicle longitudinal direction, and which, in respect of their terminal connecting portions (8) for the appliance, can be offset in height relative to each other, characterised in that the lower control arms (7) are made in one piece and are mounted on a transverse axis (5), which is both laterally displaceable and pivotable in a vertical transverse plane.

2. Hitching device according to claim 1, characterised in that the transverse axis (5) can be fixed in any set position.

3. Hitching device according to claims 1 and 2, characterised in that the transverse axis (5)

a) is associated with a frame (1, 20), which is supported against a ball joint (2) on the underside of the vehicle;

b) is hingedly suspended from a two-arm lever (12), which is mounted to swing around a central axis (12a) in the vehicle longitudinal direction; and in that the lifting cylinders (13) are hinged to the lever (12).

4. Hitching device according to claims 1 to 3, characterised in that the ball joint (2) is located at least in the vicinity of the vehicle vertical axis.

5. Hitching device according to claims 1 to 4, characterised in that the transverse axis (5), is connected to the two-armed lever (12) via swingable struts (10) which extend substantially vertically.

6. Hitching device according to claims 1 to 5, characterised in that the swingable struts (10) and the lifting cylinders (13) extend at least nearly parallel to each other, seen in the vehicle longitudinal direction.

7. Hitching device according to claims 1 to 6, characterised in that to limit lateral movement of the lower control arms (7) the frame (1, 20) has a fork-shaped arresting member, the lateral parts (1a, 1b; 20a, 20b) of which embrace, at a distance, a stop of the vehicle.

8. Hitching device according to claim 7, characterised in that the effective distance between the lateral parts (1a, 1b; 20a, 20b) and the stop is adjustable.

9. Hitching device according to claims 7 and 8, characterised in that a stop, which is fixed transversely to the vehicle longitudinal direction and moveable in the vehicle longitudinal direction, is mounted onto the vehicle and co-acts with the arresting member in such a manner that in a normal position of the stop sufficient play exists between the arresting member and the stop for desired lateral displacement of the lower control arms (7) whereas when the stop is in its operative position it firmly abuts against the arresting member.

10. Hitching device according to claims 7 to 9, characterised in that the lateral parts (20a, 20b) of the arresting member are arranged at a predetermined distance from each other which sets the lateral swivelling range of the lower control arms (7).

11. Hitching device according to claims 7 to 10, characterised in that the stop can be fixed in any intermediate position.

12. Hitching device according to claims 7 to 11, characterised in that a flap (22), which is displaceable around a transverse axis (5), serves as the stop.

13. Hitching device according to claims 7 to 12, characterised in that the operating device for pivoting the flap (22) co-acts with the lower control arms (7) in such a manner that the flap (22) is pivoted into its operative position by the lifted lower control arms (7), and in that there is an additional operating means (crank (23)), which is independent of the lower control arms (7).

14. Hitching device according to claim 7 and 8, characterised in that the stop (15) is rigidly attached to the vehicle, and two single-operating hydraulically operated drives (hydraulic cylinder (14)) serve to change the effective distance between the lateral parts (1a, 1b) and the stop (15).

15. Hitching device according to claims 7, 8 and 14, characterised in that the hydraulic cylinders (14) are carried by the lateral parts (1a, 1b).

16. Hitching device according to claims 1 to 15, characterised in that the two-armed lever (12) can be fixed at least in its extreme pivoting positions.

17. Hitching device according to claim 16, characterised in that the lever (12) can be fixed in infinitely variable pivot positions.

18. Hitching device according to claims 16 and 17, characterised in that the lever (12) is adjustable by means of a double-operation control motor or two single-operation motors (hydraulic cylinder (17)) working in opposition to each other, or a manual crank.

Fig.1

Fig.2